# EUROPÄISCHE PATENTSCHRIFT

(11) **EP 2 744 688 B1**
(45) Veröffentlichungstag und Bekanntmachung des Hinweises auf die Patenterteilung: **01.03.2017**
(21) Anmeldenummer: 12748015.0
(22) Anmeldetag: 10.08.2012
(51) Int. Cl.: B60R 15/04

(54) **TOILETTE FÜR FAHRZEUGE, INSBESONDERE FÜR BUSSE, REISEMOBILE, CARAVANS UND YACHTEN**
TOILET FOR VEHICLES, IN PARTICULAR FOR BUSES, MOTORHOMES, CARAVANS AND YACHTS
TOILETTES POUR VÉHICULES, EN PARTICULIER POUR BUS, CAMPING-CARS, CARAVANES ET YACHTS

(30) Priorität: 17.08.2011 DE 102011110900
(43) Veröffentlichungstag der Anmeldung: 25.06.2014
(73) Patentinhaber: Dometic GmbH, 57074 Siegen (DE)
(72) Erfinder: JOCHIM, Tim, 57234 Wilnsdorf (DE); OXENFARTH, Jens, 58256 Ennepetal (DE)
(74) Vertreter: Grosse, Felix Christopher
(86) Internationale Anmeldenummer: PCT/EP2012/065664
(87) Internationale Veröffentlichungsnummer: WO 2013/024017

(56) Entgegenhaltungen:
- EP-A1- 0 940 510
- EP-A1- 1 958 826
- EP-A2- 1 820 913
- WO-A2-2004/051013
- US-A1- 2003 154 543
- US-A1- 2011 061 156

## Beschreibung

Die Erfindung betrifft eine Toilette für Fahrzeuge, insbesondere für Busse, Reisemobile, Caravans und Yachten, die eine Toilettenschüssel aufweist, wobei die Toilettenschüssel im Bereich einer unteren Öffnung von einer Halterung gehalten ist.

Derartige Toiletten sind im Stand der Technik bekannt. Beispielsweise geht aus der DE 20 2007 002 270 U1 ein Toilettensystem für den Einbau in ein Fahrzeug hervor, bei dem an einer Basis eine Toilettenschüssel drehbar befestigt ist. Flüssigkeiten und Feststoffe können durch die untere Öffnung in einen Tank in der Basis übergeleitet werden.

Als nachteilig an den bekannten Toiletten hat sich herausgestellt, dass die Toilettenschüssel zum Einspannen von oben in eine Halterung gedrückt wird. Dadurch kommt es zu hohen internen Spannungen in der Toilettenschüssel, die zu Rissen führen können. Durch Vibrationen und Erschütterungen, z. B. durch Fahrzeugbewegungen, kommt es so schnell zu Beschädigungen der Toilettenschüssel.

Ein weiteres Problem ist, dass der Übergang von der Toilettenschüssel zum Tank nicht direkt erfolgt, sondern dass weitere Bauteile zwischen Toilettenschüssel und Tank angeordnet sind. Der Übergang muss deshalb flüssigkeitsdicht gestaltet sein.

Die Druckschrift EP 0 940 510 A1 zeigt eine Toilette mit den Merkmalen des Oberbegriffs von Anspruch 1. Die Toilettenschüssel weist jedoch kein Befestigungselement auf, das an der Toilettenschüssel fixiert ist und mit einer Halterung verbunden ist. Somit können Relativbewegungen zwischen Toilettenschüssel an der Halterung auftreten und Flüssigkeit kann am unteren Rand der Toilettenschüssel zwischen Toilettenschüssel und Halterung eintreten.

Es ist daher Aufgabe der Erfindung, eine Toilette für Fahrzeuge aufzuzeigen, bei der die Toilettenschüssel in einfacher Weise sicher und flüssigkeitsdicht an einer Halterung befestigt ist.

Diese Aufgabe wird durch eine Toilette für Fahrzeuge mit den Merkmalen von Anspruch 1 gelöst. Bevorzugte Ausführungsformen der Erfindung gehen aus den Unteransprüchen 2 bis 3hervor.

Erfindungsgemäß ist zwischen der Toilettenschüssel und der Halterung ein Dichtelement angeordnet.

Auf diese Weise wird ein besonders vorteilhafter Dichtverband bestehend aus Toilettenschüssel, Dichtelement und Halterung gebildet. Das Dichtelement hat hierbei sowohl eine ausgleichende als auch eine dichtende Funktion. Mithin ist es möglich, die Toilettenschüssel frei von internen Spannungen zu montieren und zeitgleich den Übergang zum Tank flüssigkeitsdicht abzudichten. Die Toilette kann gezielt bis auf den exakten Dichtpunkt hergestellt und erzeugt werden. Die Halterung ist einfach reproduzierbar und erlaubt größere Fertigungstoleranzen. Die Einzelteile der Toilette, insbesondere die Schüssel und die Dichtung, sind einfach austauschbar. Die Toilette ist mithin service- und ersatzteilfreundlich. Weiterhin ist es möglich, die Toilettenschüssel durch eine höherwertige auszutauschen. Insbesondere kann eine relativ einfache Kunststofftoilettenschüssel gegen eine Keramik-, Glas- oder Metalltoilettenschüssel ausgetauscht werden. Die Fügegeometrie kann an eine Kunststoffschüssel angespritzt werden. Somit ist es möglich, eine Vielzahl von Toilettenschüsseln in der erfindungsgemäßen Toilette zu verbauen.

Gemäß einer bevorzugten Ausführungsform ist das Dichtelement ein Dichtring. Derartige Dichtringe können einen Elastomer enthalten. Ein Dichtring ist flexibel einsetzbar und austauschbar sowie wieder verwendbar.

Ein bekannter Dichtring kann zwei Schenkel aufweisen, zwischen denen ein Winkel besteht. Mithin ist es möglich, die Toilettenschüssel beispielsweise in vertikaler und horizontaler Richtung einzufassen und zu haltern. Die Dichtfläche wird so vorteilhaft vergrößert und die Dichtigkeit verbessert.

Ein Schenkel des bekannten Dichtrings kann im Querschnitt Y-förmig ausgebildet sein. Durch diese Gestaltung wird der Druck auf die anliegenden Dichtflächen im eingebauten Zustand erhöht. Vorzugsweise ist ein horizontaler Schenkel derart ausgebildet.

Zweckmäßigerweise ist an einem Schenkel eine Rippe vorgesehen. Die Rippe kann sich vorzugsweise in radialer Richtung zur Toilettenschüssel hin erstrecken. Es können auch mehrere Rippen beabstandet von einander vorgesehen sein. Die Rippen ermöglichen einen Ausgleich in horizontaler Richtung. Zudem werden einzelne Kammern geschaffen, die die Dichtwirkung verstärken.

Besonders weist ein Schenkel des bekannten Dichtrings eine Wulst auf. Durch die Wulst kann der Dichtring zwischen mehreren Dichtflächen eingeklemmt werden.

In einer Ausführungsform hat ein Schenkel des bekannten Dichtrings die Form eines Fußes. Durch die bogenförmige Gestaltung können größere vertikale Toleranzen ausgeglichen werden.

Besonders ist der bekannte Dichtring über ein Fixierungselement an der Toilettenschüssel befestigt. Als Fixierungselemente kommen Verschlussschellen, Federbandschellen, Ohrschellen (auch mit einstellbarer Spannungs- oder Schließkraft), Gewinde-Schlauchsschellen oder Kabelbinder in Betracht. Ein Schenkel des Dichtrings weist eine umlaufende Nut für das Fixierungselement auf. Auf diese Weise wird das Fixierungselement sicher geführt, noch bevor es fest angezogen ist.

Der bekannte Dichtring im Querschnitt T-förmig. Zwei Schenkel des Dichtrings können dann die Toilettenschüssel einfassen und der dritte Schenkel kann dazu benutzt werden, den Dichtring in der Halterung, vorzugsweise klemmend, zu fixieren. Am im Querschnitt T-förmigen Dichtring kann zudem eine weitere Dichtlippe an der Verbindungsstelle der Schenkel des Dichtrings angesetzt sein.

Zweckmäßigerweise ist der bekannte Dichtring über ein Klemmelement an der Halterung fixiert, wobei das Klemmelement vorzugsweise in die Halterung eingeclipst oder an die Halterung geschraubt ist. Das Klemmelement macht es möglich, den Druck auf den Dichtring zu erhöhen oder gezielt einzustellen.

Es sind an der Halterung und/oder dem Klemmelement Dichtflächen für den bekannten Dichtring ausgebildet. Diese Dichtflächen können insbesondere angefaste Flächen sein.

An der bevorzugten Ausführung der Toilette ist an der Toilettenschüssel kann ein Befestigungsring fixiert, wobei der Befestigungsring vorzugsweise in die Halterung eingeclipst ist, und wobei weiter bevorzugt das Dichtelement zwischen dem Befestigungsring und der Halterung angeordnet ist. Der Befestigungsring ist ein Ausgleichselement. Er kann in verschiedenen Formen in Anpassung an die Toilettenschüssel bereitgestellt werden. Die Montage wird durch diese Gestaltung vereinfacht, da der Dichtring nur auf die Halterung aufgelegt werden muss und dann die Toilettenschüssel mit dem angeklebten Befestigungsring eingerastet werden kann.

Das Dichtelement kann weiterhin einen Klebstoff enthalten. Der Klebstoff kann auf die Halterung in einem Fügebereich aufgetragen sein. Nach Einsetzen der Toilettenschüssel kann der Klebstoff aushärten bis eine flüssigkeitsdichte Verbindung entstanden ist.

Die Erfindung ist nachfolgend anhand von mehreren in den Figuren dargestellten Ausführungsbeispielen näher erläutert. Es zeigen:
Fig. 1 eine Querschnittsdarstellung einer bekannten Toilette;
Fig. 2 eine Detaildarstellung der Fig. 1 im Bereich der Halterung;
Fig. 3 eine Querschnittsdarstellung einer bekannten Ausführungsform der Toilette;
Fig. 4 eine Querschnittsdarstellung einer bekannten Ausführungsform der Toilette;
Fig. 5 eine Querschnittsdarstellung einer bevorzugten Ausführungsform einer erfindungsgemäßen Toilette; und
Fig. 6 eine Querschnittsdarstellung der bevorzugten Ausführungsform der Toilette.

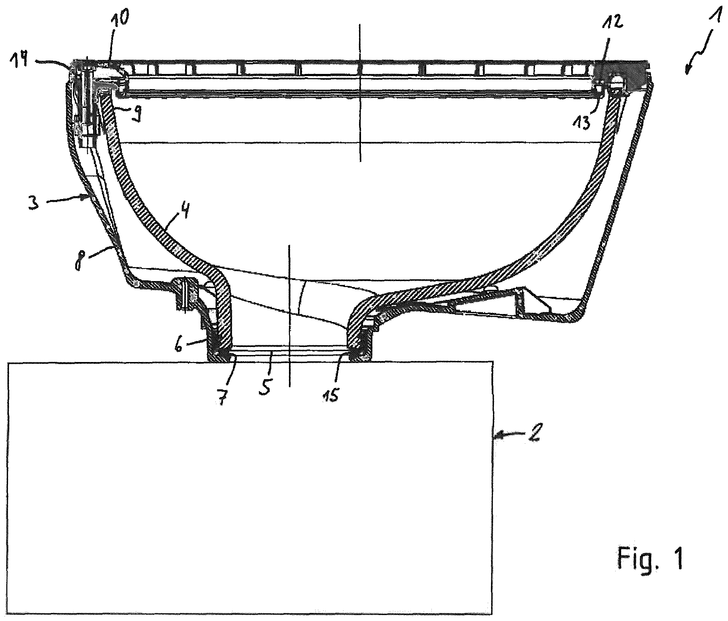

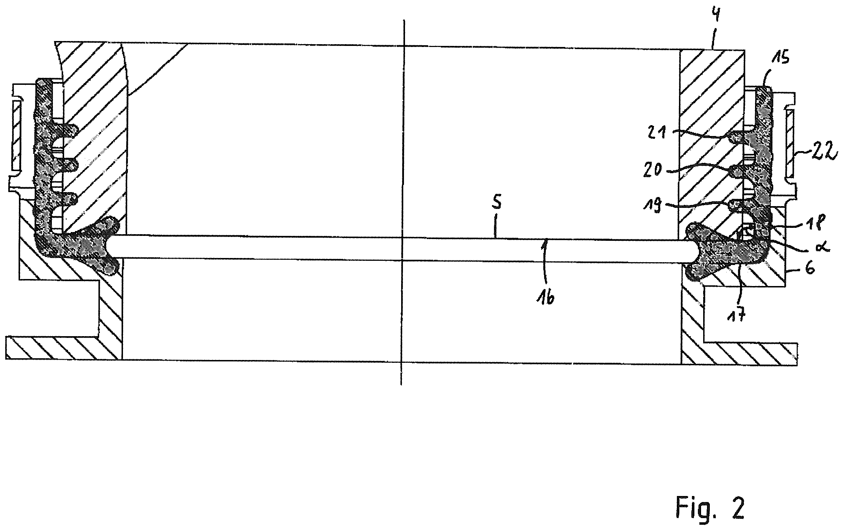

In den Fig. 1 und 2 ist eine Toilette 1 für Fahrzeuge, insbesondere für Busse, Reisemobile, Caravans und Yachten, gezeigt. Die Toilette 1 umfasst eine Basis 2, die ein Toilettenoberteil 3 stützt. In dem Toilettenoberteil 3 ist eine Toilettenschüssel 4 angeordnet. Die Toilettenschüssel 4 ist im Bereich einer unteren Öffnung 5 von einer Halterung 6 gehalten. Erfindungsgemäß ist zwischen der Toilettenschüssel 4 und der Halterung 6 ein umlaufendes Dichtelement 7 angeordnet.

Die Halterung 6 bildet zugleich die Verkleidung 8 des Toilettenoberteils 3. Auf das obere Ende 9 der Toilettenschüssel 4 ist ein Montagering 10 mit Schraubbolzen befestigt. Der Montagering 10 weist einen Spülkanal 12 mit Öffnungen 13 auf, um Wasser in die Toilettenschüssel 4 spritzen zu können. Auf der in der Bildebene linken Seite ist ein Vakuumbrecher 14 am Montagering 10 angeordnet.

Die Halterung 6 und ein übliches Dichtelement 7, hier ein Dichtring 15, sind in Fig. 2 im Detail gezeigt. Der Dichtring 15 ist in die Halterung 6 eingelegt und umgibt die Öffnung 5 am unteren Ende 16 der Toilettenschüssel 4. Der Dichtring 15 ist im Querschnitt L-förmig und weist zwei im rechten Winkel α zueinander angeordnete Schenkel 17, 18 auf. Der horizontale Schenkel 17 ist Y-förmig ausgeführt. Am vertikalen Schenkel 18 sind drei Rippen 19-21 vorgesehen, die sich in radialer Richtung zur Toilettenschüssel 4 hin erstrecken. Um den vertikalen Schenkel 18 ist ein Fixierungselement 22 in Form einer Verschlussschelle gelegt. Die Verschlussschelle 22 ist ein Bestandteil der Halterung 6. Durch Schließen der Verschlussschelle 22 wird eine Kraft in die Halterung 6 eingeleitet, die bewirkt, dass die Halterung 6 radial zusammengedrückt wird. Dadurch wird eine Kraft auf den Dichtring 15 ausgeübt, die dazu führt, dass sich der Dichtring 15 an die Toilettenschüssel 4 anschmiegt. Auf diese Weise wird ein dichter Verbund zwischen der Toilettenschüssel 4 und der Halterung 6 bereitgestellt.

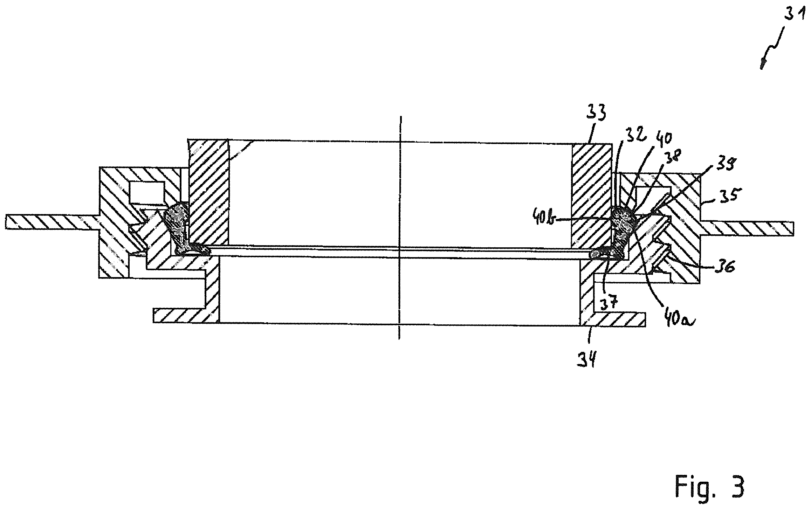

In der Fig. 3 ist eine bekannte Ausführungsform der Toilette 31 dargestellt. Darin ist der Dichtring 32 zwischen der Toilettenschüssel 33 und der Halterung 34 sowie einem Klemmelement 35 in Form einer Verkleidung fixiert. Das Klemmelement 35 ist dabei auf die Halterung 34 über ein Gewinde 36 aufgeschraubt. Der Dichtring 32 ist an einem Schenkel 37 fußförmig ausgebildet. Dieser Schenkel 37 ist bogenförmig gekrümmt. Der andere Schenkel 38 weist eine Wulst 39 auf, die an Dichtflächen 40-40b an der Toilettenschüssel 33, der Halterung 34 und dem Klemmelement 35 anliegt.

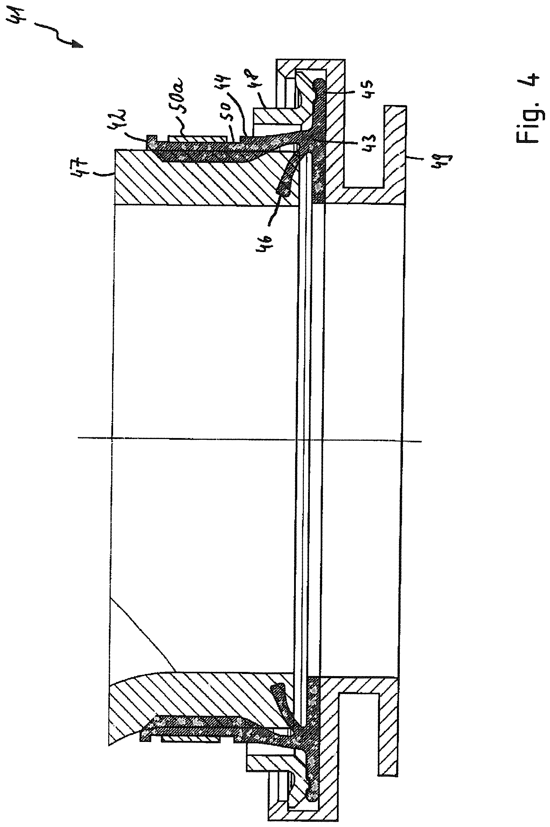

Fig. 4 zeigt eine bekannte Ausführungsform der Toilette 41 mit einem Dichtring 42, der einen im Wesentlichen T-förmigen Querschnitt hat. An die Verbindungsstelle 43 der Schenkel 44, 45 ist eine zusätzliche Dichtlippe 46 angesetzt, die sich schräg nach oben und in Richtung der Toilettenschüssel 47 erstreckt. Der radial außen liegende horizontale Schenkel 45 des Dichtrings 42 ist durch ein umlaufendes Klemmelement 48 an der Halterung 45 fixiert. Das Klemmelement 48 ist in die Halterung 49 eingerastet. Der vertikale Schenkel 44 des Dichtrings 42 weist auf der Außenseite eine umlaufende Nut 50 auf. In der Nut 50 ist ein Fixierungselement 50a in Form einer Schelle angeordnet.

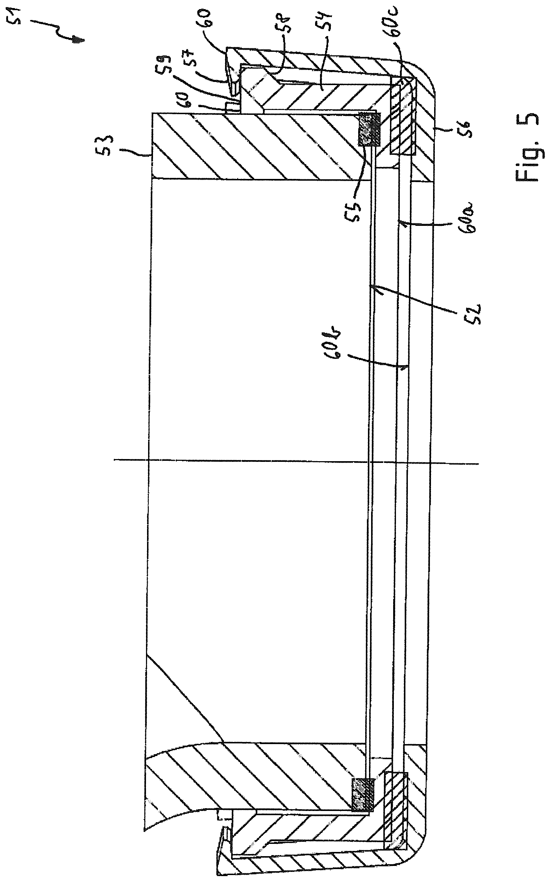

Im bevorzugten Ausführungsbeispiel der erfindungsgemäßen Toilette 51 der Fig. 5 ist am unteren Ende 52 der Toilettenschüssel 53 ein Befestigungsring 54 mit Klebstoff 55 befestigt. Der Befestigungsring 54 ist in die Halterung 56 eingerastet. Entsprechende Rastnasen 57, 58 sind an den oberen Enden 59, 60 von Befestigungsring 54 und Halterung 56 vorgesehen. Zwischen der Unterseite 60a des Befestigungsrings 54 und der Oberseite 60b der Halterung 56 ist ein Dichtelement 60c in Form eines Dichtrings angeordnet.

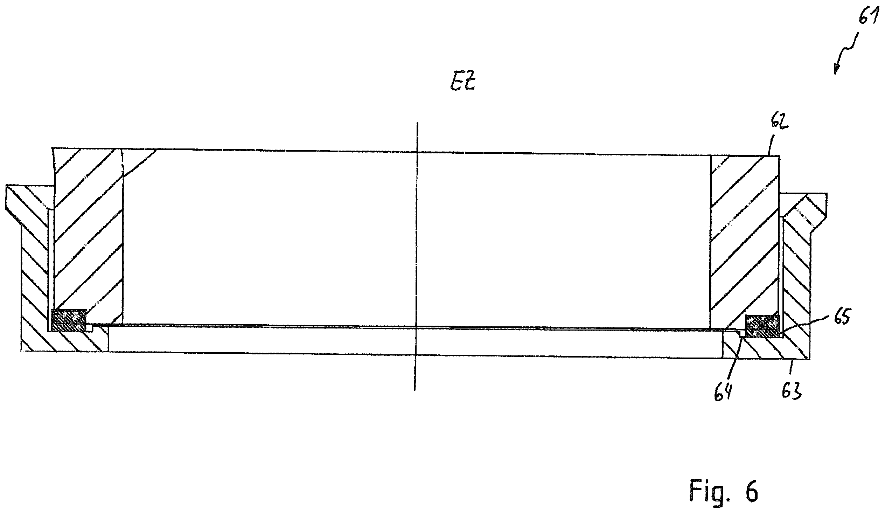

Fig. 6 zeigt eine bekannte Ausführungsform der Toilette 61, bei der die Toilettenschüssel 62 in die Halterung 63 eingesteckt ist. In eine umlaufende Nut 64 in der Halterung 63 ist ein Klebstoff enthaltendes Dichtelement 65 umlaufend aufgetragen. Der Klebstoff 65 verklebt im eingebauten Zustand EZ die Halterung 63 und die Toilettenschüssel 62 miteinander flüssigkeitsdicht.

### Bezugszeichen

- 1 -: Toilette
- 2 -: Basis
- 3 -: Toilettenoberteil
- 4 -: Toilettenschüssel
- 5 -: Öffnung von 4
- 6 -: Halterung
- 7 -: Dichtelement
- 8 -: Verkleidung
- 9 -: Oberes Ende von 4
- 10 -: Montagering
- 12 -: Spülkanal
- 13 -: Öffnung
- 14 -: Vakuumbrecher
- 15 -: Dichtring
- 16 -: unteres Ende von 4
- 17 -: Schenkel
- 18 -: Schenkel
- 19 -: Rippe
- 20 -: Rippe
- 21 -: Rippe
- 22 -: Fixierungselement
- 31 -: Toilette
- 32 -: Dichtring
- 33 -: Toilettenschüssel
- 34 -: Halterung
- 35 -: Klemmelement
- 36 -: Gewinde
- 37 -: Schenkel
- 38 -: Schenkel
- 39 -: Wulst
- 40 -: Dichtfläche
- 40a -: Dichtfläche
- 40d -: Dichtfläche
- 41 -: Toilette
- 42 -: Dichtring
- 43 -: Verbindungsstelle
- 44 -: Schenkel
- 45 -: Schenkel
- 46 -: Dichtlippe
- 47 -: Toilettenschüssel
- 48 -: Klemmelement
- 49 -: Halterung
- 50 -: Nut
- 50a -: Fixierungselement
- 51 -: Toilette
- 52 -: unteres Ende von 51
- 53 -: Toilettenschüssel
- 54 -: Befestigungsring
- 55 -: Klebstoff
- 56 -: Halterung
- 57 -: Rastnase
- 58 -: Rastnase
- 59 -: oberes Ende von 54
- 60 -: oberes Ende von 56
- 60a -: Unterseite von 54
- 60b -: Oberseite von 56
- 60c -: Dichtelement
- 61 -: Toilette
- 62 -: Toilettenschüssel
- 63 -: Halterung
- 64 -: Nut
- 65 -: Dichtelement

- α -: Winkel zwischen 17, 18
- EZ -: Eingebauter Zustand

## Patentansprüche

1. Toilette für Fahrzeuge, insbesondere für Busse, Reisemobile, Caravans und Yachten, die eine Toilettenschüssel (4, 53) aufweist, wobei die Toilettenschüssel (4, 53) im Bereich einer unteren Öffnung (5) von einer Halterung (6, 56) gehalten ist, wobei zwischen der Toilettenschüssel (4, 53) und der Halterung (6, 56) ein umlaufendes Dichtelement (7, 60c) angeordnet ist,
**dadurch gekennzeichnet, dass** an der Toilettenschüssel (53) ein Befestigungsring (54) fixiert ist, wobei der Befestigungsring (54) in die Halterung (56) eingeclipst ist, und wobei weiter das Dichtelement (60c) zwischen dem Befestigungsring (54) und der Halterung (56) angeordnet ist.

2. Toilette nach Anspruch 1, **dadurch gekennzeichnet, dass** das Dichtelement (7, 60c) ein Dichtring (15) ist.

3. Toilette nach Anspruch 1 oder 2, **dadurch gekennzeichnet, dass** das Dichtelement (60c) einen Klebstoff enthält.

## Claims

1. Toilet for vehicles, in particular for busses, motor homes, caravans and yachts, which comprises a toilet bowl (4, 53), wherein the toilet bowl (4, 53) is held in the area of a lower opening (5) by a holder (6, 56), wherein a circumferential sealing element (7, 60c) is arranged between the toilet bowl (4, 53) and the holder (6, 56),
**characterized in that** a fastening ring (54) is fixed on the toilet bowl (53), wherein the fastening ring (54) is clipped into the holder (56), and wherein furthermore the sealing element (60c) is arranged between the fastening ring (54) and the holder (56).

2. The toilet according to Claim 1, **characterized in that** the sealing element (7, 60c) is a sealing ring (15).

3. The toilet according to Claim 1 or 2, **characterized in that** the sealing element (7, 60c) contains an adhesive.

## Revendications

1. Toilettes pour véhicules, en particulier pour bus, camping-cars, caravanes et yachts, présentant une cuvette de toilettes (4, 53), la cuvette de toilettes (4, 53) étant maintenue par un support (6, 56) dans la zone d'une ouverture inférieure (5), un élément d'étanchéité périphérique (7, 60c) étant disposé entre la cuvette de toilettes (4, 53) et le support (6, 56),
**caractérisées en ce qu**'une bague de fixation (54) est fixée à la cuvette de toilettes (53), la bague de fixation (54) étant clipsée dans le support (56), l'élément d'étanchéité (60c) étant en outre disposé entre la bague de fixation (54) et le support (56).

2. Toilettes selon revendication 1, **caractérisées en ce que** l'élément d'étanchéité (7, 60c) est une bague d'étanchéité (15).

3. Toilettes selon revendication 1 ou 2, **caractérisées en ce que** l'élément d'étanchéité (60c) comporte un adhésif.
